## Europäisches Patentamt

## European Patent Office

## Office européen des brevets

(11) Veröffentlichungsnummer : **0 033 933**
**B1**

(12) **EUROPÄISCHE PATENTSCHRIFT**

(45) Veröffentlichungstag der Patentschrift :
02.05.84

(21) Anmeldenummer : 81100733.5

(22) Anmeldetag : 02.02.81

(51) Int. Cl.³ : **H 04 M 3/56**, H 04 Q 1/457,
H 04 Q 11/04

(54) Verfahren zur Einspeisung von Hörtönen in Konferenzverbindungen.

(30) Priorität : 12.02.80 DE 3005162

(43) Veröffentlichungstag der Anmeldung :
19.08.81 Patentblatt 81/33

(45) Bekanntmachung des Hinweises auf die Patenterteilung : 02.05.84 Patentblatt 84/18

(84) Benannte Vertragsstaaten :
CH FR GB LI SE

(56) Entgegenhaltungen :
US-A- 4 119 807
INTERNATIONAL CONFERENCE ON PRIVATE ELEC-
TRONIC SWITCHING SYSTEMS, 10.-12. April 1978,
Seiten 211-214 London, G.B. D.A.T. RAYFIELD et al. :
"The plessey PDX — A new digital PABX"
INTERNATIONAL SWITCHING SYMPOSIUM, 25.-29.
Oktober 1976, Seiten 243.2.1-243.2.8 Kyoto, JP. M.J.
KELLY: "Study of a rural digital end office"
COMMUNICATION & ELECTRONIQUE, Nr. 59, Oktober 1977, Seiten 99-115 Paris, FR. H. CAMPAGNO et
al. : "Système E10 : L'équipement de tonalités et
auxiliaires"
ERICSSON REVIEW, Band 57, Nr. 1, 1980, Seiten 16-
25 Stockholm, SE. G. BRUNBERG et al. : "A digital
telecommunication system for operational centres"

(73) Patentinhaber : SIEMENS AKTIENGESELLSCHAFT
Berlin und München Wittelsbacherplatz 2
D-8000 München 2 (DE)

(72) Erfinder : Zeiträg, Rolf, Dipl.-Phys.
Dompfaffweg 3
D-8000 München 82 (DE)

## Verfahren zur Einspeisung von Hörtönen in Konferenzverbindungen

Die Erfindung betrifft ein Verfahren zur Einspeisung von Hörtönen in Konferenzverbindungen in einem PCM-Zeitmultiplex-Vermittlungssystem, in deren Verlauf aus von den Konferenzteilnehmern gelieferten und während eines ersten Pulsrahmens in einer Hälfte eines Konferenzspeichers zwischengespeicherten, gegebenenfalls in lineare Codedarstellung gewandelten PCM-Worten, im nachfolgenden Pulsrahmen Gesamtsummencodeworte gebildet werden, aus denen jeweils im selben Pulsrahmen durch Subtraktion eines der genannten PCM-Worte mehrere verschiedene Teilsummencodeworte gebildet werden, die nach Zwischenspeicherung in dieser Hälfte des Konferenzspeichers von dort aus, gegebenenfalls nach Rückwandlung in nicht lineare Codedarstellung, demjenigen Konferenzteilnehmer zugesandt werden, dessen Gesamtsummenanteil sie nicht enthalten, während in der anderen Hälfte des Konferenzspeichers im Verlaufe des genannten nachfolgenden Pulsrahmens neue von den Konferenzteilnehmern stammende PCM-Worte zwischengespeichert werden und wobei die beiden Hälften des Konferenzspeichers alternierend ihre Rollen vertauschen (siehe z. B. US-A-4 119 807).

Für PCM-Zeitmultiplex-Vermittlungssysteme ist es bekannt, die Hörtöne unter Verwendung bestimmter PCM-Worte zu erzeugen, die periodisch und unter Berücksichtigung bestimmter Ton-Pausen-Programme ausgesendet werden, und dann nach empfangsseitiger Digital-Analog-Wandlung jeweils einen bestimmten Hörton ergeben (siehe z. B. DE-OS 25 41 295).

Bei Konferenzverbindungen entspricht die Einspeisung solcher digital erzeugter Hörtöne der Aufschaltung · eines weiteren Konferenzteilnehmers. Dementsprechend wurden bisher solche Hörtöne auch sämtlichen Teilnehmern der Konferenzverbindung gleichzeitig zugesendet. Für bestimmte Hörtöne, nämlich beispielsweise für den Aufschalteton oder den Anklopfton, ist es jedoch auch von Interesse, daß diese nur an bestimmte der jeweiligen Konferenzteilnehmer ausgesendet werden.

Aufgabe der vorliegenden Erfindung ist es daher, ein Verfahren zur Einspeisung von Hörtönen in Konferenzverbindungen anzugeben, das es gestattet, die Hörtoneinspeisung wahlweise allgemein und teilnehmerindividuell vornehmen zu können.

Gelöst wird diese Aufgabe bei in der eingangs erwähnten Art zustande gebrachten Konferenzverbindungen erfindungsgemäß dadurch, daß außer den genannten Gesamtsummencodeworten Hörtonsummencodeworte gebildet werden, die als Summenanteile außer dem einen Gesamtsummencodewort jeweils ein einem bestimmten Hörton entsprechendes PCM-Wort umfassen, und daß zusammengehörende Gesamtsummencodeworte und Hörtonsummencodeworte in einem weiteren Speicher zwischengespeichert werden, von dem aus aufgrund von Hörtonsendekriterien jeweis ein bestimmtes derselben der Teilsummenbildung unterworfen wird.

Das erfindungsgemäße Verfahren läßt sich mit einem Konferenzsatz durchführen, der gegenüber bekannten Konferenzsätzen in Aufbau und Betriebsweise nur unwesentlich geändert ist.

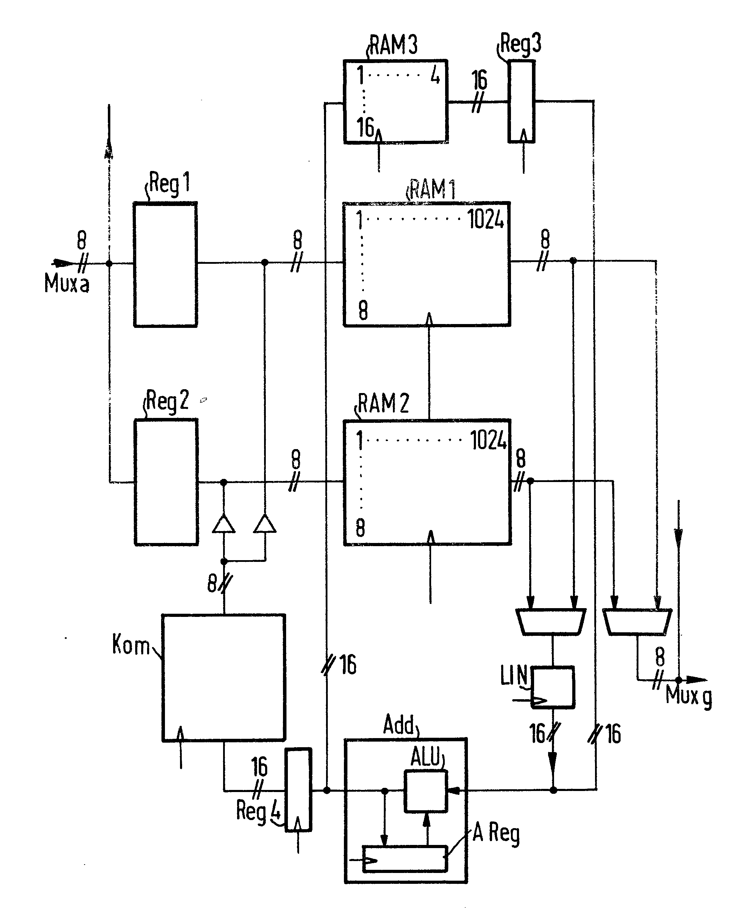

Nachstehend wird die Erfindung anhand eines Ausführungsbeispiels unter Bezugnahme auf die Zeichnung erläutert, die ein Blockschaltbild eines zur Durchführung des erfindungsgemäßen Verfahrens geeigneten Konferenzsatzes zeigt.

Bei dem vorliegenden Ausführungsbeispiel ist angenommen, daß der in der Figur dargestellte Konferenzsatz der Koppelgruppe einer PCM-Vermittlungsstelle zugeordnet ist, an die 32 PCM-Leitungen angeschlossen sind. Die auf diesen PCM-Leitungen übertragenen PCM-Worte gelangen nach einer Serien-Parallel-Wandlung und kanalweiser Verschachtelung auf eine acht Leitungszweige für die Parallelübertragung der acht Bit der PCM-Worte umfassende Zeitmultiplexleitung, auf der eine Bit-Übertragungsrate von acht MBit/sec herrscht. In der Figur ist auf der linken Seite der ankommende Teil Muxa und auf der rechten Seite der abgehende Teil Muxg dieser Zeitmultiplexleitung dargestellt. Auf dieser Zeitmultiplexleitung auftretende PCM-Worte, die zu normalen Zweierverbindungen gehören, werden über eine hier nicht dargestellte Zeitkoppelstufe der Vermittlungsstellen vermittelt. Die zu Konferenzverbindungen gehörenden PCM-Worte werden hingegen auf den dargestellten Konferenzsatz ausgekoppelt und gelangen über ein Eingangsregister Reg1 oder Reg2 an die eine oder andere Hälfte RAM1 oder RAM2 eines Konferenzspeichers. Diese Konferenzspeicherhälften sind jeweils in hier 64 Speicherbereiche unterteilt, die 64 gleichzeitig möglichen Konferenzverbindungen zugeordnet sind, und jeweils acht Speicherplätze für acht Konferenzteilnehmer aufweisen. Außerdem weisen diese Konferenzspeicherhälften jeweils Speicherplatz für die im vorliegenden Fall drei PCM-Wörter auf, die zur Erzeugung von drei unterschiedlichen Hörtönen dienen.

Die Konferenzspeicherteile RAM1 und RAM2 werden sowohl beim Einschreiben als auch beim Auslesen wahlfrei angesteuert und wechseln, wie noch ausgeführt wird, alternativ ihre Rolle, beispielsweise bei der Aufnahme von PCM-Worten von der ankommenden Multiplexleitung Muxa.

Während eines Pulsrahmens, in dem beispielsweise die Konferenzspeicherhälfte RAM1 der Informationsaufnahme dient, gelangen die auf der Zeitmultiplexleitung Muxa ankommenden PCM-Worte, die die Anteile der einzelnen Konferenzteilnehmer darstellen, in die zugeordneten Speicherplätze der Speicherbereiche dieser Speicherhälfte. Außerdem werden auf der Zeitmultiplexleitung Muxa ankommende zur Darstellung der Hörtöne dienende PCM-Wörter, die an zentraler Stelle von einem Hörtongenerator erzeugt worden sind, in die hierfür vorgesehenen Speicherplätze der Konferenzspeicherhälfte RAM1 eingeschrieben.

Im darauffolgenden Pulsrahmen erfolgt von dieser Konferenzspeicherhälfte aus die Verarbeitung der solcherart eingeordneten PCM-Wörter, wogegen die nunmehr ankommenden PCM-Wörter entsprechend der vorstehend beschriebenen Weise in die zweite Hälfte RAM2 des Konferenzspeichers eingeschrieben werden.

Im Zuge der erwähnten Verarbeitung werden zunächst die Konferenzanteile darstellenden PCM-Wörter nacheinander aus der Speicherhälfte RAM1 ausgelesen und, sofern sie eine nichtlineare Codedarstellung aufweisen, durch eine Einrichtung LIN einer Codewandlung in lineare Codedarstellung unterworfen, um in dieser Form an ein Addierwerk ADD zu gelangen. In diesem Addierwerk werden durch die eigentliche Recheneinheit ALU die von den einzelnen Konferenzteilnehmern einer Konferenzverbindung stammenden PCM-Wörter nacheinander aufsummiert, wobei die entstehenden Zwischensummen jeweils im Zwischenregister AReg zwischengespeichert und dann wieder der Recheneinheit ALU zugeführt werden.

Das hierbei entstehende Gesamtsummencodewort GS wird in einen weiteren Konferenzspeicher RAM3 des Konferenzsatzes eingeschrieben, wobei die Übergabe jedoch derart erfolgt, daß dieses Codewort auch in dem Register AReg des Addierwerks ADD verbleibt.

Nunmehr werden aus der Speicherhälfte RAM1 nacheinander die zur Darstellung der Hörtöne dienenden PCM-Wörter ausgelesen, gegebenenfalls linearisiert, und zur Bildung jeweils gesonderter Hörtonsummencodeworten zu den Gesamtsummencodeworten GS hinzuaddiert. Die einzelnen Hörtonsummencodeworte werden ebenfalls nach ihrem Entstehen in einen individuell zugeordneten Speicherplatz des weiteren Konferenzspeichers RAM3 eingeschrieben, der dementsprechend bei n vorgesehenen Hörtönen n + 1 Speicherplätze, hier also vier Speicherplätze, aufweist. In diesem Konferenzspeicher befinden sich also jetzt außer den lediglich aus den Konferenzanteilen einer Konferenzverbindung gebildeten Gesamtsummencodeworten GS drei Hörsummencodeworte HS1 bis HS3, die aus dem Gesamtsummencodewort und dem jeweiligen Hörtoncodewort als Summenanteile gebildet sind.

Im Zuge des nächsten Verarbeitungsschrittes, der ebenfalls in dem zweiten betrachteten Pulsrahmen liegt, wird nun nacheinander von einem der im Konferenzspeicher RAM3 gespeicherten Summencodeworte das von dem jeweils betreffenden Konferenzteilnehmer stammende PCM-Wort subtrahiert und so ein Teilsummencodewort erzeugt. Die Entscheidung darüber, ob die Subtraktion vom Gesamtsummencodewort GS oder von einem der Hörtonsummencodeworte HS1 bis HS3 erfolgt, hängt davon ab, ob zu diesem Zeitpunkt überhaupt ein Hörton eingeblendet werden soll, und wenn dies der Fall ist, welcher der zur Verfügung stehenden Hörtöne dem betreffenden Konferenzteilnehmer, dem die gerade behandelte Zeitlage zugeordnet ist, zugesendet werden soll.

Die erwähnte Subtraktion wird ebenfalls unter Zuhilfenahme der Addiereinrichtung ADD vorgenommen.

Die Subtraktionsergebnisse werden über ein Zwischenregister Reg. 4 gegebenenfalls nach einer Umwandlung in nichtlineare Codedarstellung mit Hilfe der Einrichtung KOM wieder in die den einzelnen Konferenzteilnehmern zugeordneten Speicherzellen des Konferenzspeicherteils RAM1 eingeschrieben. Von dort aus erfolgt während der den einzelnen Konferenzteilnehmern zugeordneten Zeitlagen eine Ausgabe aus diesem Konferenzspeicherteil bzw. ein Einschleusen auf den abgehenden Teil Muxg der Zeitmultiplexleitung. Den einzelnen Konferenzteilnehmern werden daher jeweils Teilsummen zugeführt, die entweder nur aus den Konferenzanteilen der jeweils übrigen Konferenzteilnehmer oder aus diesen Konferenzanteilen und einem die Erzeugung eines bestimmten Hörtons dienenden PCM-Wort zusammengesetzt sind.

PCM-Worte, die in dem Pulsrahmen beim Konferenzsatz ankommen, in dem die erwähnten Ausgaben auf den abgehenden Leitungsteil der Zeitmultiplexleitung erfolgen, werden wieder nach zwischenzeitlichem Wechsel der Betriebsart der Konferenzspeicherhälften in die Konferenzspeicherhälfte RAM1 eingeschrieben. Die weiter oben erläuterte Verarbeitung solcher PCM-Worte in Form einer Summenbildung und nachfolgenden Differenzbildung erfolgt nunmehr von der anderen Konferenzspeicherhälfte RAM2 aus.

## Anspruch

Verfahren zur Einspeisung von Hörtönen in Konferenzverbindungen in einem PCM-Zeitmultiplex-Vermittlungssystem, in deren Verlauf aus von den Konferenzteilnehmern gelieferten und während eines ersten Pulsrahmens in einer Hälfte (RAM1) eines Konferenzspeichers (RAM1, RAM2) zwischengespeicherten, gegebenenfalls in lineare Codedarstellung gewandelten PCM-Worten im nachfolgenden Pulsrahmen Gesamtsummencodeworte (GS) gebildet werden, aus denen jeweils im selben Pulsrahmen durch Subtraktion eines der genannten PCM-Worte mehrere verschiedene Teilsummencodeworte gebildet werden, die nach Zwischenspeicherung in dieser Hälfte (RAM1) des Konferenzspeichers von dort aus jeweils, gegebenenfalls nach Rückwandlung in nicht lineare Codedarstellung, demjenigen Konferenzteilnehmer zugesandt werden, dessen Gesamtsummenanteil sie nicht enthalten, während in der anderen Hälfte (RAM2) des Konferenzspeichers im Verlaufe des genannten nachfolgenden Pulsrahmens neue von den Konferenzteilnehmern stammende PCM-Worte zwischengespeichert werden und wobei die beiden Hälften des Konferenzspeichers alternierend ihre Rollen vertauschen, dadurch gekennzeichnet, daß außer den genannten Gesamtsummencodeworten (GS) Hörtonsummencodeworte HS1-HS3 gebildet werden, die als Summenanteile außer dem einen Gesamtsummencodewort jeweils ein einem bestimmten Hörton entsprechendes PCM-Wort umfassen, und daß aufgrund ihrer Pulsrahmenzugehörigkeit zusammengehörende Gesamtsummencodeworte und Hörtonsummencodeworte in einem weiteren Speicher (RAM3) zwischengespeichert werden, von dem aus aufgrund von Hörtonsendekriterien jeweils ein bestimmtes derselben der Teilsummenbildung unterworfen wird.

## Claim

Method for feeding call progress tones in conference connections in a PCM-t.d.m.-exchange system, in whose course, in the following pulse frame, total sum code words (GS) are formed from PCM words which are supplied by the conference subscribers and intermediately stored in one half (RAM1) of a conference store (RAM1, RAM2) during a first pulse frame and which are possibly converted into linear code representation, from which total sum code words (GS) a plurality of different partial sum code words are formed in the same pulse frame by subtraction of one of said PCM words, which partial sum code words following the intermediate storage in this half (RAM1) of the conference store, are respectively sent from the latter to that conference subscriber, if necessary after re-conversion into non-linear code representation, whose total sum share they do not include, whereas in the course of said following pulse frame, new PCM-words derived from the conference subscribers are intermediately stored in the other half (RAM2) of the conference store, and where both halves of the conference store alternately exchange their functions, characterised in that in addition to said total sum code words (GS) call progress tone sum code words (HS1-HS3) are formed which in addition to the one total sum code word respectively comprise a PCM word, which corresponds to a specific call progress tone, as sum component, and that on the basis of their pulse frame assignment correlated total sum code words and call progress tone sum code words are intermediately stored in a further store (RAM3), from which on the basis of transmitting call progress tone criteria, a specific one thereof is subjected to the partial sum formation.

## Revendication

Procédé pour injecter des tonalités audibles dans des communications de conférence intervenant dans un système de transmission à multiplexage temporel MIC et pendant le déroulement desquelles à partir de mots MIC délivrés par les abonnés participant à la conférence et mémorisés temporairement pendant une première trame d'impulsions dans une moitié (RAM1) d'une mémoire de conférence (RAM1, RAM2) et transformés éventuellement en une représentation codée linéaire se trouvent formés, dans la trame d'impulsion suivante, les mots de code de sommes totales (GS) à partir desquels se trouvent formés, dans la même trame d'impulsions et par soustraction de l'un desdits mots PCM, plusieurs mots différents de code de sommes partielles qui, après mémorisation intermédiaire dans cette moitié (RAM1) de la mémoire de conférence, sont envoyés à partir de là, éventuellement après transformation inverse en une représentation codée non linéaire, à l'abonné participant à la conférence, dont lesdits codes ne contiennent pas la participation dans la somme totale, tandis que de nouveaux mots MIC provenant des abonnés participant à la conférence sont mémorisés temporairement dans l'autre moitié (RAM2) de la mémoire de conférence pendant le déroulement de ladite trame d'impulsions suivante, et selon lequel les deux moitiés de la mémoire de conférence permutent alternativement leurs rôles, caractérisé par le fait qu'en dehors desdits mots de code de sommes totales (GS) se trouvent formés des mots de code de sommes de tonalités audibles (HS1-HS3), qui, en tant qu'éléments de somme englobent, en dehors d'un mot de code de somme totale, respectivement un mot MIC correspondant à une tonalité audible déterminée, et que des mots de code de sommes totales et des mots de code de somme de tonalités audibles, allant de pair sont mémorisées temporairement, sur la base de leur appartenance à une trame d'impulsions, dans une autre mémoire (RAM3), à partir de laquelle, sur la base de critères d'émission de tonalités audibles, un code déterminé faisant partie desdits codes participe à la formation d'une somme partielle.